Europäisches Patentamt

European Patent Office

Office européen des brevets

(11) Veröffentlichungsnummer: **0 270 772**
**A2**

(12) **EUROPÄISCHE PATENTANMELDUNG**

(21) Anmeldenummer: 87114931.6

(22) Anmeldetag: 13.10.87

(51) Int. Cl.4: **B21B 37/00** , G01B 11/16

(30) Priorität: 06.12.86 DE 3641748

(43) Veröffentlichungstag der Anmeldung:
15.06.88 Patentblatt 88/24

(84) Benannte Vertragsstaaten:
**AT BE DE FR GB IT NL**

(71) Anmelder: **Hoesch Stahl Aktiengesellschaft**
**Rheinische Strasse 173**
**D-4600 Dortmund 1(DE)**

(72) Erfinder: **Tenhaven, Ulrich, Dr.**
**Kleiner Floraweg 22**
**D-4600 Dortmund 50(DE)**
Erfinder: **Ihlefeldt, Jürgen, Dr.**
**Bredowstrasse 4a**
**D-4600 Dortmund 12(DE)**
Erfinder: **Tappe, Wilhelm, Dr.**
**Wulfskamp 23**
**D-4600 Dortmund 16(DE)**

(54) **Verfahren und Vorrichtung zur Messung und Regelung des Verformungsgrades.**

(57) Es wird eine äußerst genaue Messung der Dehnung an einem sich bewegenden Band 11 aus Stahl dadurch vorgenommen, daß am Rand des Bandes im genauen Abstand voneinander zwei Markierungen 13, 14 durch einen geteilten Laserstrahl 16, 17 zeitgleich eingebrannt werden und der Abstand nach dem dehnenden Vorgang in einem Dressiergerüst oder einer Bandbehandlungsanlage, z. B. einer Contiglühe durch eine CCD-Diodenzeilenkamera 18, 19 nachgemessen wird und aus der Vergrößerung des Abstandes der Verformungsgrad bzw. die Dehnung errechnet wird, die angezeigt wird oder in eine Regeleinrichtung 22 zur Einstellung des Walzspaltes oder des Bandzuges eingegeben wird.

Fig.1

EP 0 270 772 A2

## Verfahren und Vorrichtung zur Messung und Regelung des Verformungsgrades

Die Erfindung betrifft ein Verfahren und eine Vorrichtung zur Messung und Regelung des Verformungsgrades an einem durch ein Walzgerüst oder eine Bandbehandlungsanlage laufendem Band aus Metall auch mit spiegelnder glatter Oberfläche, bei dem auf dem Band vor dem Einlauf zum Walzgeräst oder der Bandbehandlungsanlage voneinander in Laufrichtung des Bandes beabstandete optisch sichtbare Markierungen angebracht werden, die durch optisch-elektronische Mittel aufgrund ihres unterschiedlichen Reflexionsgrades zur übrigen Oberfläche des Bandes beim Anstrahlen durch Licht erfaßt werden.

Aus der DE-OS 33 09 951 ist bekannt, durch Vergleiche der Abstände zwischen mit Farbe aufgebrachten Markierungsgittern die Dehnungen und damit den Verformungsgrad direkt zu bestimmen. Von Nachteil ist, daß bei der späteren Verarbeitung die Farbmarkierungen stören. Bei einem Walzgeräst sind Farbmarkierungen auch deshalb nicht möglich, weil die Farbe auf dem eingefetteten Blech nicht haftet und beim Durchlaufen der Walzen verwischt.

Dieser Nachteil läßt sich bei der Verwendung von unsichtbaren magnetischen Marken, wie sie aus der DE-AS 10 31 033 bekannt sind, vermeiden. Diese Markierungen lassen sich auf dem bewegenden und auch schwingenden Blech nur relativ großflächig und nur mit erheblichen Lageungenauigkeitn anbringen, so daß sie für eine Meßeinrichtung, die sehr genau mit wenig Platzbedarf arbeiten soll, ausscheiden.

In der DE-AS 21 33 942 wurde zur Bestimmung speziell der Strekkung von Bändern beim Durchlaufen des Walzgerüstes ein Verfahren vorgeschlagen, daß mit sogenannten "natürlichen" Marken nach dem Korrelationsprinzip arbeitet. Dieses Verfahren ist für spiegelnd glatte Oberflächen wegen des Fehlens von Marken bzw. größeren Unregelmäßigkeiten ungenau und es ist auch bei geeigneten Anwendungsgebieten nur mit einer sehr komplizierten Meßvorrichtung durchführbar. Meßsysteme nach dem Doppler-Verfahren sind ebenfalls zu ungenau und zu aufwendig. Die ohne besondere Markierungen arbeitenden Systeme werden besonders durch Wasser, Dampf, Staub, Rauheit und Bandflattern beeinträchtigt.

Es ist die Aufgabe der vorliegenden Erfindung, ein Verfahren und eine Vorrichtung zu erhalten, mit denen bei relativ einfacher Anwendung und relativ einfachem Aufbau der benutzten Vorrichtungteile bei geringem Platzbedarf und unter Einhaltung eines relativ großen Sicherheitsabstandes der Vorrichtungteile zum Band auch bei Beeinflussung durch Wasser, Dampf, Staub, Rauheit und Bandflattern äußerst genaue Meßergebnisse und Bestimmungen des Verfomungsgrades erhalten werden.

Diese Aufgabe wird durch die im kennzeichnenden Teil des Anspruches 1 genannten Verfahrensschritte mit den im Anspruch 7 genannten Merkmalen gelöst. Weiterbildungen der Erfindung sind in den Unteransprüchen 2 bis 6 und 8 bis 10 beschrieben.

Die Erfindung ist wegen der hohen Genauigkeit der Bestimmung des Verformungsgrades besonders für die Anwendung bei sehr geringen Verformungsgraden von weniger als z. B. 3 % geeignet. Solche geringen Verformungsgrade treten auf, wenn beim Walzen in einem Dressiergeräst bei dünnen Stahlblechen eine ausgeprägte Streckgrenze beseitigt werden soll, um die Tiefziehfähigkeit des Bleches bei erhöhter Festigkeit zu verbessern. Der Dressiergrad oder Verformungsgrad liegt zwischen 0,3 und 2 %.

Ein genauso geringer Verformungsgrad wird erhalten, wenn den nach dem Kaltwalzen viel zu glatten Blechen durch geringes erneutes Walzen mit einer aufgerauten Walze eine rauhe Oberflächenstruktur aufgewalzt wird, die zwecks besserer Haftung von Farbe oder Öl erwünscht ist.

Beim Durchlaufen von Conti-oder Durchlaufglühen wird Metallband mit erheblicher Zugspannung durch die Anlage gezogen, damit kleine Unplanheiten des Bandes beseitigt werden. Die genaue Bestimmung des Verformungsgrades gestattet ein entsprechendes Einregulieren des Antriebes zum Aufbringen der Zugkraft, um den Sollwert des Verformungsgrades zu erreichen.

Zur Erzeugung bestimmter Blechqualitäten ist nach dem rekristallisierenden Glühen oft ein Dressiergerüst zum Zwecke einer Verformung, die unter 2 % liegt, nachgeschaltet.

Die Erfindung wird an Ausführungsbeispielen mit einem Dressiergerüst und an einem Ausführungsbeispiel mit einer Contiglühe näher erläutert.

Im Einlauf des Walzgerüstes 12 werden im Bereich der beiden Bandkanten, die später als Besäumschrott abgetrennt werden, bei laufendem Band 11 zeitgleich zwei kleine Markierungen 13 und 14 im festen Abstand aufgebracht. Zur Erzeugung der beiden Marken 13 und 14 wird ein Laserimpuls von einer Laserquelle 15 über Strahlenteiler und zwei Lichtleiter 16 und 17 gleicher Länge auf die Bandkante fokussiert. Der Laserimpuls dauert z. B. 1 ms lang und hat z. B. eine Breite von 2 mm, während die Bandgeschwindigkeit 400 m pro Minute beträgt. Im Auslauf des Gerüstes 12 wird der Abstand der beiden Marken 13' und 14' über scannende Detektorsysteme 18 und 19 mit hoher räumlicher Auflösung gemessen. Aus den Abständen der Marken wird im Rechner 20 der Verformungsgrad berechnet.

Der Wert des Verformungsgrades wird am Bildschirm des Anzeigegerätes 21 angezeigt und in ein Steuergerät 22 zur Einstellung des Walzspaltes eingegeben. Damit die Detektorsysteme 18 und 19, die z. B. aus CCD-Zeilenkameras mit nicht gezeichneten vorgeschalteten Objektiven bestehen, die unterschiedliche Reflexion des Lichtes an den flächenmäßig kleinen Markierungen 13' und 14' erfassen, werden diese durch die Lichtquelle 23 beleuchtet.

Die reflektierenden Lichtstrahlen von der Markierung 14' werden z. B. durch das nicht gezeichnete Objektiv auf den Diodenzeilensensor der CCD-Zeilenkamera 18 geworfen. Das Objektiv erfaßt einen Bereich, der in Bandlaufrichtung etwa 5 mm vor und 15 mm hinter der Marke 14' liegt, wenn keine Verformung stattgefunden hat.

Das Objektiv verkleinert den erfaßten Bereich von z. B. 20 mm Länge im Verhältnis 1:10, so daß ein entsprechend dem erfaßten Bereich entsprechender schmaler Lichtstreifen vom Objektiv auf den Diodenzeilensensor der CCD-Zeilenkamera 18 geworfen wird.

Durch diesen Lichtstreifen werden die auf dem Diodenzeilensensor in einer Reihe senkrecht aufgereihten kleinen Fotodioden belichtet. Es sind ca. 2000 miniaturisierte Fotodioden zu einer Reihe, die eine Länge von ca. 20 mm hat, aufgereiht. Diese kleinen Fotodioden oder lichtempfindlichen Elemente werden durch eine Ansteuerungselektronik, z. B. des Rechners, periodisch der Reihe nach angesteuert und es wird die Hell-oder Dunkelinformation abgefragt. In der Zählenrichtung des Rechners 29 wird ausgezählt, wieviel aufeinander folgende lichtempfindliche Elemente in der Reihe belichtet sind.

Es werden bei der Hell-/Dunkelabfrage nur Werte als hell gezählt, die oberhalb eines vorgegebenen Schwellwertes liegen.

Als Schwellwert der Lichtstärke ist z. B. ein Wert angegeben, der 20 % unter dem Durchschnittswert der Lichtstärke aller Fotodioden liegt. Der Rechner ermittelt die Fotodioden, die unter dem Schwellwert liegen, als dunkel. Aus der Laufzeit, die die Abfrage der Ansteuerungselektronik braucht, bis die erste dunkle Fotodiode ermittelt ist, errechnet der Rechner 20 die genaue Position dieser dunklen Fotodiode, die mit der Position der Markierung 14' identisch ist. Aus dem Vergleich mit der Sollposition von 14', die bei keinerlei Dehnung vorhanden ist, und der Länge zwischen den Markierungen 13 und 14 errechnet der Rechner mit Hilfe bekannter Programme den Verformungsgrad.

Die CCD-Zeilenkamera 19 besteht nur aus wenigen Fotoelementen. Diese Zeilenkamera 19 ist so geschaltet, daß ein Startsignal über den Rechner 20 an die Zeilenkamera 18 abgegeben wird, wenn die erste an der linken Seite der Zeilenkamera 19 befindliche Fotodiode als dunkel identifiziert wird. Der Rechner 20 und die Zeilenkamera 19 sind immer in Betrieb, während die Zeilenkamera 18 erst durch das Startsignal der Zeilenkamera 19 gestartet wird. Da in der Bandlaufrichtung 24 zuerst die Markierung 14' die Zeilenkamera 19 passiert und ein falsches Startsignal verursachen würde, so muß vom Rechner dieses Startsignal unterdrückt werden. Der Rechner 20 gibt erst den Start für die Zeilenkamera 18 frei, wenn in einer bestimmten Zeit ein zweites Startsignal von der Zeilenkamera 19 kommt. Die Laserquelle 15 gibt ihre Impulse zum Markieren in beliebig zeitlich einstellbaren Intervallen ab.

Anstelle des geteilten Laserstrahles können auch zwei synchron geschaltete einzelne Laserquellen für die Markierungen 13 und 14 benutzt werden. Es ist auch möglich, nur einen Laserstrahl zu benutzen, der zuerst die Markierung 14 erzeugt und nach einer bestimmten Zeit die Markierung 13, wenn das zu markierende Band 11 mit annähernd konstanter Geschwindigkeit bewegt wird.

Zum Auskorrigieren von kleinen Geschwindigkeitsunterschieden muß in diesem Fall das genaue Maß des Abstandes der Markierung 13 und 14 auch am Einlauf gemessen werden, was durch eine in der gleichen Weise aufgebaute Vorrichtung geschieht, wie sie am Auslauf mit den CCD-Zeilenkmaeras 18 und 19, den Rechner 20 und der Lichtquelle 23 beschrieben wurde. Der Verformungsgrad wird dann in bekannter Weise unter Einbeziehung des genau ermittelten Ausgangsabstandes bestimmt.

Der Verformungsgrad wird schon ausreichend genau bestimmt, wenn der Abstand der Markierungen 13 und 14 100 mm beträgt. Die Genauigkeit nimmt zu, wenn der Abstand noch größer gewählt wird.

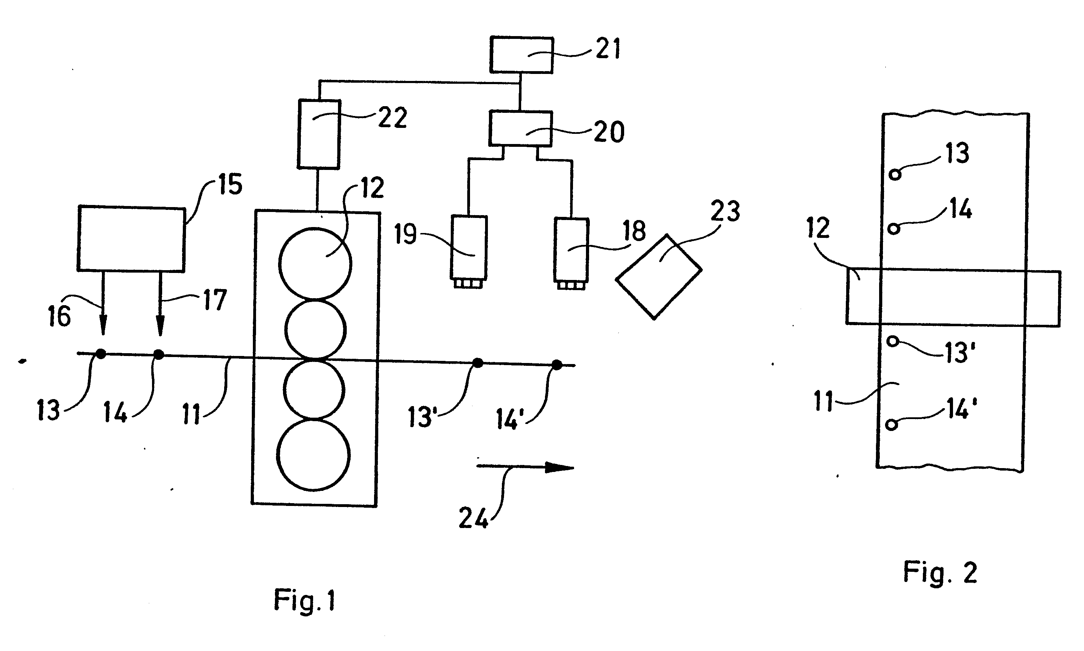

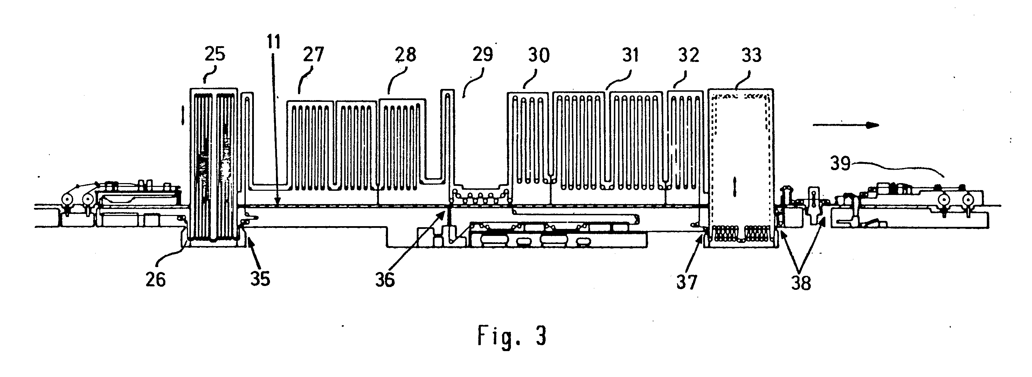

Das erfindungsgemäße Verfahren und die Vorrichtung zur Dehnungsmessung und zum Regeln der Dehnung ist auch an einer Durchlaufglühanlage anwendbar. Bei diesem Anwendungsfall ist es von Vorteil, wenn die Markierung der Meßstrecke, wie auch die Längenmessung in den Teilen vorgenommen wird, in denen das Band einer möglichst geringen und gleichen Zugspannung unterworfen wird, um Fehler durch eine elastische Dehnung möglichst klein zu halten. Die Markierung der Meßstrecke durch den Laserstrahl befindet sich in diesem Fall im Bandspeicher 25 des Einlaufes der in Fig. 3 schematisch gezeichneten Durfhlaufglühe. Die Markierungseinrichtung ist dort mit 26 bezeichnet. Das markierte Band 11 durchläuft die Aufheizzone 27, die Haltezone 28, die Kühlung 29, die Wiederaufheizzone 30, die Anlaßzone 31, die Kühlung 32 und den Auslaufspeicher 33. Das den Abstand messende System ist am Auslaufspeicher mit 34 bezeichnet.

Eine genaue Messung der Verlängerung in der Durchlaufglühe ist an allen zugbeeinflussenden Systemen (S-rollensätze 35, 36, 37, 38, Haspelanlage 39) erforderlich. Die Markierungsvorrichtung mit den Laserstrahlen liegt bei allen S-Rollensätzen in Laufrichtung des Bandes 11 gesehen, dicht vor dem S-Rollensatz und die Zeilenkameras dicht dahinter. Die gewonnen Meßsignale werden in der beschriebenen Form verarbeitet und auf die Regelung der Antriebe gegeben.

**Ansprüche**

1. Verfahren zur Messung und Regelung des Verformungsgrades an einem durch ein Walzgerüst (12) oder eine Bandbehandlungsanlage laufendem Band (11) aus Metall auch mit spiegelnder glatter Oberfläche, bei dem auf dem Band (11) vor dem Einlauf zum Walzgerüst (12) oder der Bandbehandlungsanlage voneinander in Laufrichtung des Bandes (11) beabstandete optisch sichtbare Markierungen (13, 14) angebracht werden, die durch optisch elektronische Mittel (18, 19) aufgrund ihres unterschiedlichen Reflextionsgrades zur übrigen Oberfläche des Bandes (11) beim Anstrahlen durch Licht (23) erfaßt werden, dadurch gekennzeichnet, daß die Markierungen (13, 14) durch Anzschmelzen oder Verdampfen mit Hilfe eines oder mehrerer Laserstrahlen (16, 17) an einer der Flächen des Bandes (11) erzeugt werden und durch die optische-elektronischen Mittel (18, 19) die Abstandsänderungen zwischen jeweils 2 gleichen Marken vor oder nach dem Durchlaufen des Walzgerüste (12) oder der Bandbehandlungsanlage gemessen werden und aus dem Verhältnis der Abstandsänderung zum gesamten Abstand, der vor dem Durchlaufen des Walzgerüstes (12) oder der Bandbehandlungsanlage, bestand der Verformungsgrad bestimmt wird, der auf einem Anzeigegerät (21) angezeigt wird oder zum korrigierenden Regeln in die Regeleinrichtung (22) des Walzgerüstes (12) oder der Bandbehandlungsanlage eingegeben wird.

2. Verfahren nach Anspruch 1, dadurch gekennzeichnet, daß die Markierungen (13, 14) in unmittelbar Nähe der Begrenzungskante erzeugt werden und in dem später nach Beendigung des Walzprozesses oder des Bearbeitungsprozesses zur Begradigung der Kanten abzuschneidenden Bereich liegen.

3. Verfahren nach den Ansprüchen 1 und 2, dadurch gekennzeichnet, daß das optisch-elektronische Mittel (18, 19) aus einer in Bandlaufrichtung sich erstreckenden CCD-Diodenzeilenkamera besteht.

4. Verfahren nach den Ansprüchen 1 bis 3, dadurch gekennzeichnet, daß das optisch elektronische Mittel (18, 19) aus einem in Bandlaufrichtung scannendem System mit optischem Aufnehmer besteht.

5. Verfahren nach den Ansprüchen 1 bis 3, dadurch gekennzeichnet, daß in Bandlaufrichtung vor dem Walzgerüst oder der Bandbehandlungsanlage jeweils zeitgleich zwei mit genauem Abstand aufgebrachte Markierungen durch einen aufgeteilten Laserstrahl erzeugt werden.

6. Verfahren nach Anspruch 1 bis 3, dadurch gekennzeichnet, daß in Bandlaufrichtung zeitgleich zwei Markierungen in genauem Abstand über eine Funkenentladung erzeugt werden.

7. Vorrichtung zur Messung und Regelung des Verformungsgrades an einem durch ein Walzgerüst (12) oder eine Bandbehandlungsanlage laufendem Band aus Metall mit einer Markierungsvorrichtung für optisch sichtbare Markierungen, einem Detektorsystem zur Erkennung der Markierungen und einer Auswerteinrichtung zum Ermitteln des Abstandes der Markierungen zur Durchführung des Verfahrens nach den Ansprüchen 1 bis 6, dadurch gekennzeichnet, daß die Markierungsvorrichtung in Laufrichtung des Bandes (11) vor dem Walzgerüst (12) oder einer eine Zugkraft auf das Band (11) aufbringenden Rolle einer Bandbehandlungsanlage angebracht ist und das Detektorsystem zum Erkennen der Markierung in Laufrichtung des Bandes (11) hinter diesen Vorrichtungen angebracht ist.

8. Vorrichtung nach Anspruch 7 dadurch gekennzeichnet, daß die Markierungsvorrichtung aus einer einen Laserstrahl oder einen elektrischen Funken erzeugenden Einrichtung besteht.

9. Vorrichtung nach Anspruch 8 dadurch gekennzeichnet, daß die den Laserstrah erzeugende Einrichtung eine Teilungseinrichtung für den Laserstrahl enthält und Mittel zum gleichzeitigen Fokussieren der beiden Teilstrahlen auf das Band (11) unter Belassen eines Zwischenraumes in Laufrichtung des Bandes (11) gesehen, enthält.

10. Vorrichtung nach den Ansprüchen 7 bis 9 dadurch gekennzeichnet, daß das Detektorsystem eine CCD-Zeilenkamera enthält.

Fig. 1

Fig. 2

0 270 772

Fig. 3